# EUROPÄISCHE PATENTSCHRIFT

(11) **EP 3 303 430 B1**
(45) Veröffentlichungstag und Bekanntmachung des Hinweises auf die Patenterteilung: **03.04.2019**
(21) Anmeldenummer: 16717154.5
(22) Anmeldetag: 19.04.2016
(51) Int. Cl.: C08G 18/48, C08G 18/76, C08G 18/79, C08J 9/12

(54) **POLYURETHANE MIT REDUZIERTER ALDEHYDEMISSION**
POLYURETHANES WITH REDUCED ALDEHYDE EMISSION
POLYURETHANES AVEC EMISSION REDUITE D'ALDEHYDE

(30) Priorität: 28.05.2015 EP 15169712
(43) Veröffentlichungstag der Anmeldung: 11.04.2018
(73) Patentinhaber: BASF SE, 67056 Ludwigshafen am Rhein (DE)
(72) Erfinder: OTERO MARTINEZ, Iran, 32351 Stemwede (DE); ZARBAKHSH, Sirus, 67117 Limburgerhof (DE)
(74) Vertreter: BASF IP Association
(86) Internationale Anmeldenummer: PCT/EP2016/058629
(87) Internationale Veröffentlichungsnummer: WO 2016/188675

(56) Entgegenhaltungen:
- WO-A1-2013/116092
- WO-A1-2015/071063
- US-A1- 2009 227 758

## Beschreibung

Die vorliegende Erfindung betrifft ein Verfahren zur Herstellung von Polyurethanen bei dem man (a) Polyisocyanat, (b) polymeren Verbindungen mit gegenüber Isocyanaten reaktiven Gruppen, (c) Katalysatoren, (d) einer CH-Aciden Verbindung gemäß der allgemeinen Formel (1) 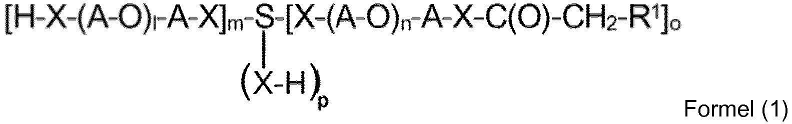 wobei H-für Wasserstoff, -X- unabhängig voneinander für Sauerstoff oder eine -NH- Gruppe, -A- unabhängig voneinander für einen linearen oder verzweigtkettigen, aliphatischen oder aromatischen Kohlenwasserstoffrest mit 2 bis 20 Kohlenstoffatomen, -O- für Sauerstoff, S für einen aliphatischen, cycloaliphatischen oder aromatischen, linearen oder verzweigtkettigen Kohlenwasserstoffrest, der substituiert sein kann, -C(O)- für einen Carbonylrest, -CH₂- für einen Methylenrest, R¹ für NO₂ oder einen elektronenziehenden Rest der allgemeinen Formel -C(O)-R² steht und R² unabhängig voneinander für einen Rest steht, ausgewählt ist aus der Gruppe bestehend aus H, -NH₂, -NH-R³ -NR⁴R⁵, OR⁶ oder R⁷, wobei R³, R⁴, R⁵, R⁶ und R⁷ unabhängig ausgewählt sind aus der Gruppe bestehend aus aliphatischen, araliphatischen oder aromatischen Kohlenwasserstoffen, die substituiert sein können, und l und n unabhängig voneinander für ganze Zahlen von 0 bis 200 stehen, m für ganze Zahlen von 0 bis 7 steht, o für ganze Zahlen von 1 bis 8 steht und p für ganze Zahlen von 0 bis 7 steht mit der Maßgabe, dass die Summe von m, o und p nicht größer als 8 ist, und gegebenenfalls (e) Treibmittel, (f) Kettenverlängerungs- und oder Vernetzungsmittel und (g)Hilfsmittel und/oder Zusatzstoffe zu einer Reaktionsmischung vermischt und die Reaktionsmischung zum Polyurethan ausreagieren lässt. Weiter betrifft die vorliegende Erfindung Polyurethane, die nach einem solchen Verfahren hergestellt wurden und den Einsatz solchen Polyurethane im Innenraum von Verkehrsmitteln.

Polyurethane zeichnen sich durch vielfältige Einsatzmöglichkeiten aus, beispielsweise in der Möbelindustrie als Sitzpolster oder als Bindemittel für Spanplatten, als Isoliermaterial in der Bauindustrie, als Isoliermaterial, beispielsweise von Rohren, Warmwasserspeichern oder Kühlschränken und als Verkleidungsteile, beispielsweise im Fahrzeugbau. Insbesondere im Automobilbau werden Polyurethane häufig eingesetzt, beispielsweise in der Automobilaußenverkleidung als Spoiler, Dachelemente, Federelemente sowie in der Automobilinnenverkleidung als Dachverkleidungen, Teppichhinterschäumungen, Türverkleidungen, Lenkräder, Schaltknöpfe und Sitzpolster.

Dabei ist bekannt, dass Polyurethane zu Emissionen organischer Substanzen neigen, die zu Geruchsbelästigungen oder im Fall von hohen Konzentrationen zu Unwohlsein führen können. Dabei sind insbesondere abgeschlossene Räume, beispielsweise im Innern von Gebäuden oder Fahrzeugen, beispielsweise Automobilen besonders betroffen. Ein Beispiel für solche Emissionen ist die Emission von Aldehyden. Dabei gibt es bereits unterschiedliche Ansätze zur Verringerung der Aldehydemissionen. So beschreibt Beispielsweise EP 1428847, dass Aldehydemissionen durch Zugabe von polymeren Stoffen mit primären und/oder secundären Aminogruppen vermindert werden können.

So beschreibt Beispielsweise EP 1428847, dass Aldehydemissionen durch nachträgliche Zugabe von polymeren Stoffen mit primären und/oder sekundären Aminogruppen vermindert werden können. Verantwortlich für die Reduktion der Emissionen sind die Amingruppen im Polymer. Da diese gegenüber Isocyanat reaktiv sind und größtenteils durch Reaktion mit dem Isocyanat deaktiviert werden, sollte der polymere Wirkstoff auf den bereits hergestellten Schaum gegeben werden. Nachteilig ist hier ein umständliches Verfahren mit einem Zusätzlichen Schritt der Nachbehandlung des Schaumstoffs. Der Einsatz in kompakten Systemen oder geschlossenzelligen Schaumstoffen ist nicht möglich.

Aus US 2006/0141236 ist der Einsatz von Hydrazinverbindungen in Polyurethanen als Aldehydfänger beschrieben. Dabei wird die aktive Substanz direkt in die Polyolkomponente gegeben. Hydrazine und Hydrazinderivate weisen allerdings eine katalytische Aktivität auf und können die Polyurethanreaktion beeinflussen. Weiter wird nur eine geringe Reduktion der Aldehydemissionen von ca. 60 % erhalten.

In US 20130203880 wird der Einsatz von Polyhydrazodicarbonamid als Substanz zur Reduktion von Aldehydemissionen in Polyurethanschaumstoffen beschrieben. Eine deutliche Reduktion von Aldehyden wird allerdings nur bei Zugabe einer großen Menge an Polyhydrazodicarbonamid von 2 bis 5,5 Gew.-% in der Polyolkomponente erreicht. Da Polyhydrazodicarbonamid ebenfalls katalytische Eigenschaften aufweist, wird durch die Zugabe dieser Substanz in dieser Größenordnung das Reaktionsprofil geändert.

Aufgabe der vorliegenden Erfindung war es, Polyurethanen, insbesondere Polyurethanschaumstoffe, zu liefern, die eine verringerte Aldehydemission aufweisen. Insbesondere sollten die für die reduzierte Aldehydemission verantwortlichen Substanzen eine lang andauernde Wirksamkeit zeigen und zu keinen zusätzlichen Emissionen des Polyurethans führen. Weiter sollen die emissionarmen Polyurethanschaumstoffe durch ein einfaches Verfahren herstellbar sein, bei dem die Zugabe der für die Reduktion der Aldehydemmissionen verantwortlichen Substanzen direkt zu der Reaktionsmischung zur Herstellung des Polyurethans möglich ist. Insbesondere sollen dabei kostengünstige und einfach zu handhabende Stoffe zum Einsatz kommen, die die Herstellung der Polyurethane nicht beeinträchtigen.

Überraschenderweise konnte die erfindungsgemäße Aufgabe gelöst werden durch ein Verfahren zur Herstellung von Polyurethanen bei dem man (a) Polyisocyanat, (b) polymeren Verbindungen mit gegenüber Isocyanaten reaktiven Gruppen, (c) Katalysatoren, (d) einer CH-Aciden Verbindung gemäß der allgemeinen Formel (1) 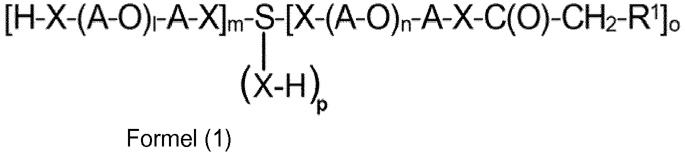 wobei H-für Wasserstoff, -X- unabhängig voneinander für Sauerstoff oder eine -NH- Gruppe, A- unabhängig voneinander für einen linearen oder verzweigtkettigen, aliphatischen oder aromatischen Kohlenwasserstoffrest mit 2 bis 20 Kohlenstoffatomen, -O- für Sauerstoff, S für einen aliphatischen, cycloaliphatischen oder aromatischen, linearen oder verzweigtkettigen Kohlenwasserstoffrest, der substituiert sein kann, -C(O)- für einen Carbonylrest, -CH₂- für einen Methylenrest, R¹ für NO₂ oder einen elektronenziehenden Rest der allgemeinen Formel -C(O)-R² steht und R² unabhängig voneinander für einen Rest steht, ausgewählt ist aus der Gruppe bestehend aus H, -NH₂, -NH-R³ -NR⁴R⁵, OR⁶ oder R⁷, wobei R³, R⁴, R⁵, R⁶ und R⁷ unabhängig ausgewählt sind aus der Gruppe bestehend aus aliphatischen, araliphatischen oder aromatischen Kohlenwasserstoffen, die substituiert sein können, und I und n unabhängig voneinander für ganze Zahlen von 0 bis 200 stehen, m für ganze Zahlen von 0 bis 7 steht, o für ganze Zahlen von 1 bis 8 steht und p für ganze Zahlen von 0 bis 7 steht mit der Maßgabe, dass die Summe von m, o und p nicht größer als 8 ist, und gegebenenfalls (e) Treibmittel, (f) Kettenverlängerungs- und oder Vernetzungsmittel und (g)Hilfsmittel und/oder Zusatzstoffe zu einer Reaktionsmischung vermischt und die Reaktionsmischung zum Polyurethan ausreagieren lässt.

Polyurethan im Sinn der Erfindung umfasst alle bekannten Polyisocyanat-Polyadditionsprodukte. Diese umfassen Additionsprodukte aus Isocyanat und Alkohol sowie modifizierte Polyurethane, die Isocyanurat-, Allophanat-, Harnstoff-, Carbodiimid-, Uretonimin-, Biuretstrukturen und weitere Isocyanatadditionsprodukte enthalten können. Diese erfindungsgemäßen Polyurethane umfassen insbesondere massive Polyisocyanat-Polyadditionsprodukte, wie Duromere, und Schaumstoffe auf Basis von Polyisocyanat-Polyadditionsprodukten, wie Weichschaumstoffe, Halbhartschaumstoffe, Hartschaumstoffe oder Integralschaumstoffe sowie Polyurethanbeschichtungen und Bindemittel. Weiter sind unter Polyurethanen im Sinn der Erfindung Polymerblends, enthaltend Polyurethane und weitere Polymere, sowie Schaumstoffe aus diesen Polymerblends zu verstehen. Vorzugsweise sind die erfindungsgemäßen Polyurethane Polyurethanschaumstoffe oder massive Polyurethane, die, abgesehen von den im Folgenden erläuterten Polyurethanbausteinen (a) bis (g) keine weiteren Polymere enthalten.

Im Rahmen der Erfindung werden unter Polyurethan-Schaumstoffen Schaumstoffe gemäß DIN 7726 verstanden. Dabei weisen erfindungsgemäße Polyurethan-Weichschaumstoffe eine Druckspannung bei 10 % Stauchung bzw. Druckfestigkeit nach DIN 53 421 / DIN EN ISO 604 von 15 kPa und kleiner, vorzugsweise 1 bis 14 kPa und insbesondere 4 bis 14 kPa auf. Erfindungsgemäße Polyurethan-Halbhartschaumstoffe weisen eine Druckspannung bei 10 % Stauchung nach DIN 53 421 / DIN EN ISO 604 von größer 15 bis kleiner 80 kPa auf. Erfindungsgemäße Polyurethan-Halbhartschaumstoffe und Polyurethan-Weichschaumstoffe verfügen nach DIN ISO 4590 über eine Offenzelligkeit von vorzugsweise größer 85 %, besonders bevorzugt größer 90 %. Weitere Details zu erfindungsgemäßen Polyurethan-Weichschaumstoffen und Polyurethan-Halbhartschaumstoffen finden sich im "Kunststoffhandbuch, Band 7, Polyurethane", Carl Hanser Verlag, 3. Auflage 1993, Kapitel 5.

Die erfindungsgemäßen Polyurethan-Hartschaumstoffe weisen eine Druckspannung bei 10 % Stauchung von größer gleich 80 kPa, bevorzugt größer gleich 120 kPa, besonders bevorzugt größer gleich 150 kPa auf. Weiterhin verfügt der Polyurethan-Hartschaumstoff nach DIN ISO 4590 über eine Geschlossenzelligkeit von größer 80%, bevorzugt größer 90 %. Weitere Details zu erfindungsgemäßen Polyurethan-Hartschaumstoffen finden sich im "Kunststoffhandbuch, Band 7, Polyurethane", Carl Hanser Verlag, 3. Auflage 1993, Kapitel 6.

Unter elastomeren Polyurethan-Schaumstoffen sind im Rahmen dieser Erfindung Polyurethan-Schaumstoffe nach DIN 7726 zu verstehen, die nach kurzzeitiger Verformung um 50 % der Dicke nach DIN 53 577 nach 10 Minuten keine bleibende Verformung über 2 % ihrer Ausgangsdicke aufweisen. Dabei kann es sich um einen Polyurethan-Hartschaumstoff, einen PolyurethanHalbhartschaumstoff oder einen Polyurethan-Weichschaumstoff handeln.

Bei Polyurethan-Integralschaumstoffen handelt es sich um Polyurethan-Schaumstoffe nach DIN 7726 mit einer Randzone, die bedingt durch den Formgebungsprozess eine höhere Dichte als der Kern aufweisen. Die über den Kern und die Randzone gemittelte Gesamtrohdichte liegt dabei vorzugsweise über 100 g/L. Auch bei Polyurethan-Integralschaumstoffen im Sinn der Erfindung kann es sich um Polyurethan-Hartschaumstoffe, Polyurethan-Halbhartschaumstoffe oder Polyurethan-Weichschaumstoffe handeln. Weitere Details zu erfindungsgemäßen Polyurethan-Integralschaumstoffen finden sich im "Kunststoffhandbuch, Band 7, Polyurethane", Carl Hanser Verlag, 3. Auflage 1993, Kapitel 7.

Dabei werden erfindungsgemäße Polyurethane erhalten indem man Polyisocyanate (a) mit polymeren Verbindungen mit gegenüber Isocyanaten reaktiven Gruppen (b), gegebenenfalls Katalysatoren (c) CH-Acide Verbindungen (d) und gegebenenfalls Treibmittel (e), Kettenverlängerer (f) und sonstigen Hilfs- und Zusatzstoffen (g) zu einer Reaktionsmischung vermischt und ausreagieren lässt.

Dabei ist das erfindungsgemäße Polyurethan in einer bevorzugten Ausführungsform ein Polyurethanschaumstoff mit einer mittleren Dichte von 20 bis 850 g/L, vorzugsweise ein Polyurethanhalbhartschaumstoff oder ein Polyurethanweichschaumstoff oder ein Polyurethanhartschaumstoff, besonders bevorzugt ein elastomerer Polyurethanweichschaumstoff ein Polyurethanhalbhartschaumstoff oder ein elastomerer Polyurethanintegralschaumstoff. Der elastomere Polyurethanintegralschaumstoff weist vorzugsweise eine über den Kern und die Randzone gemittelte Dichte von 150 bis 500 g/L auf. Der Polyurethanweichschaumstoff weist vorzugsweise eine mittlere Dichte von 10 bis 100 g/L auf. Der Polyurethanhalbhartschaumstoff weist vorzugsweise eine mittlere Dichte von 70 bis 150 g/L auf.

In einer weiteren bevorzugten Ausführungsform ist das Polyurethan ein massives Polyurethan mit einer Dichte von vorzugsweise mehr als 850 g/L, vorzugsweise 900 bis 1400 g/L und besonders bevorzugt 1000 bis 1300 g/L. Dabei wird ein massives Polyurethan ohne Zugabe eines Treibmittels erhalten. Geringe Mengen an Treibmittel, beispielsweise Wasser, das herstellungsbedingt in den Polyolen enthalten ist, gilt dabei nicht als Treibmittel. Vorzugsweise enthält die Reaktionsmischung zur Herstellung des kompakten Polyurethans weniger als 0,2 Gew.-%, besonders bevorzugt weniger als 0,1 Gew.-% und insbesondere weniger als 0,05 Gew.-% Wasser.

Dabei wird das erfindungsgemäße Polyurethan vorzugsweise im Innenraum von Transportmitteln, wie Schiffen, Flugzeugen, LKW's, PKW's oder Bussen, besonders bevorzugt PKW's oder Bussen und insbesondere PKW's eingesetzt. Dabei wird der Innenraum von PKW's und Bussen im Folgenden als Automobilinnenraumteil bezeichnet. Ein Polyurethanweichschaumstoff kann dabei als Sitzpolster eingesetzt werden, ein Polyurethanhalbhartschaumstoff als Hinterschäumung von Tür-Seitenelementen oder Instrumententafeln, ein Polyurethanintegralschaumstoff als Lenkrad, Schaltknopf oder Kopfstütze und ein massives Polyurethan beispielsweise als Kabelummantelung.

Die zur Herstellung der erfindungsgemäßen Polyurethane verwendeten Polyisocyanatkomponenten (a) umfassen alle zur Herstellung von Polyurethanen bekannten Polyisocyanate. Diese umfassen die aus dem Stand der Technik bekannten aliphatischen, cycloaliphatischen und aromatischen zwei- oder mehrwertigen Isocyanate sowie beliebige Mischungen daraus. Beispiele sind 2,2'-, 2,4'- und 4,4'-Diphenylmethandiisocyanat, die Mischungen aus monomeren Diphenylmethandiisocyanaten und höherkernigen Homologen des Diphenylmethandiisocyanats (Polymer-MDI), Isophorondiisocyanat (IPDI) oder dessen Oligomere, 2,4- oder 2,6-Toluylendiisocyanat (TDI) oder deren Mischungen, Tetramethylendiisocyanat oder dessen Oligomere, Hexamethylendiisocyanat (HDI) oder dessen Oligomere, Naphtylendiisocyanat (NDI) oder Mischungen daraus.

Bevorzugt werden 2,4- und/oder 2,6-Tolylendiisocynat (TDI) oder deren Mischungen, monomere Diphenylmethandiisocyanate und/oder höherkernige Homologe des Diphenylmethandiisocyanats (Polymer-MDI) und deren Mischungen verwendet. Weitere mögliche Isocyanate sind beispielsweise im "Kunststoffhandbuch, Band 7, Polyurethane", Carl Hanser Verlag, 3. Auflage 1993, Kapitel 3.2 und 3.3.2 angegeben.

Die Polyisocyanatkomponente (a) kann in Form von Polyisocyanatprepolymeren eingesetzt werden. Diese Polyisocyanatprepolymere sind erhältlich, indem vorstehend beschriebene Polyisocyanate (Bestandteil (a-1)) im Überschuss, beispielsweise bei Temperaturen von 30 bis 100 °C, bevorzugt bei etwa 80 °C, mit Polymeren Verbindungen mit gegenüber Isocyanaten reaktiven Gruppen (b) (Bestandteil (a-2)) und/oder Kettenverlängerern (c) (Bestandteil (a-3)) zum Isocyanatprepolymer umgesetzt werden.

Polymere Verbindungen mit gegenüber Isocyanaten reaktiven Gruppen (a-2) und Kettenverlängerungsmittel (a3) sind dem Fachmann bekannt und beispielsweise beschrieben im "Kunststoffhandbuch, 7, Polyurethane", Carl Hanser-Verlag, 3. Auflage 1993, Kapitel 3.1. So können beispielsweise als Polymere Verbindungen mit gegenüber Isocyanaten reaktiven Gruppen (a-2) auch die nachfolgend unter (b) beschriebenen Polymere Verbindungen mit gegenüber Isocyanaten reaktiven Gruppen eingesetzt werden.

Als polymere Verbindungen mit gegenüber Isocyanaten reaktiven Gruppen (b) werden, solche mit einer Funktionalität von 2 bis 8 und einem zahlenmittleren Molekulargewicht von 400 bis 15000 g/mol eingesetzt, die ausgewählt sind aus der Gruppe der Polyetherpolyole, Polyesterpolyole oder Mischungen daraus.

Polyetherole werden beispielsweise hergestellt aus Epoxiden, wie Propylenoxid und/oder Ethylenoxid, oder aus Tetrahydrofuran mit wasserstoffaktiven Starterverbindungen, wie aliphatischen Alkoholen, Phenolen, Aminen, Carbonsäuren, Wasser oder Verbindungen auf Naturstoffbasis, wie Saccharose, Sorbit oder Mannit, unter Verwendung eines Katalysators. Zu nennen sind hier basische Katalysatoren oder Doppelmetallcyanidkatalysatoren, wie beispielweise in PCT/EP2005/010124, EP 90444 oder WO 05/090440 beschrieben.

Polyesterole werden z.B. hergestellt aus aliphatischen oder aromatischen Dicarbonsäuren und mehrwertigen Alkoholen, Polythioetherpolyolen, Polyesteramiden, hydroxylgruppenhaltigen Polyacetalen und/oder hydroxylgruppenhaltigen aliphatischen Polycarbonaten, vorzugsweise in Gegenwart eines Veresterungskatalysators. Weitere mögliche Polyole sind beispielsweise im "Kunststoffhandbuch, Band 7, Polyurethane", Carl Hanser Verlag, 3. Auflage 1993, Kapitel 3.1 angegeben.

Neben den beschriebenen Polyetherolen und Polyesterolen können auch füllstoffhaltige Polyetherole oder Polyesterole, auch als Polymerpolyetherole oder Polymerpolyesterole bezeichnet, eingesetzt werden. Solche Verbindungen enthalten vorzugsweise dispergierte Partikel aus thermoplastischen Kunststoffen, beispielsweise aufgebaut aus olefinischen Monomeren, wie Acrylnitril, Styrol, (Meth)Acrylaten, (Meth)Acrylsäure und/oder Acrylamid. Solche Füllstoffhaltigen Polyole sind bekannt und kommerziell erhältlich. Ihre Herstellung ist beispielweise beschrieben in DE 111 394, US 3 304 273, US 3 383 351, US 3 523 093, DE 1 152 536, DE 1 152 537 WO 2008/055952 und WO2009/128279.

In einer besonders bevorzugten Ausführungsform der vorliegenden Erfindung enthält die Komponente (b) Polyetherole und weiter bevorzugt keine Polyesterole.

Katalysatoren c) beschleunigen die Reaktion der Polyole (b) und gegebenenfalls Kettenverlängerungs- und Vernetzungsmittel (f) sowie chemischem Treibmittel (e) mit den organischen, gegebenenfalls modifizierten Polyisocyanaten (a) stark. Dabei enthalten die Katalysatoren (c) einbaubare Aminkatalysatoren. Diese weisen mindestens eine, vorzugsweise 1 bis 8 und besonders bevorzugt 1 bis 2 gegenüber Isocyanaten reaktive Gruppen, wie primäre Amingruppen, sekundäre Amingruppen, Hydroxylgruppen, Amide oder Harnstoffgruppen, vorzugsweise primäre Amingruppen, sekundäre Amingruppen, Hydroxylgruppen, auf. Einbaubare Aminkatalysatoren werden meist zur Herstellung emissionsarmer Polyurethane eingesetzt, die insbesondere im Automobilinnenbereich eingesetzt werden. Solche Katalysatoren sind bekannt und beispielsweise in EP1888664 beschrieben. Diese umfassen Verbindungen, die neben der bzw. den gegenüber Isocyanaten reaktiven Gruppen vorzugsweise eine oder mehrere tertiäte Aminogruppen aufweisen. Vorzugsweise trägt mindestens eine der tertiären Aminogruppen der einbaubaren Katalysatoren mindestens zwei aliphatische Kohlenwasserstoffreste, vorzugsweise mit 1 bis 10 Kohlenstoffatomen je Rest, besonders bevorzugt mit 1 bis 6 Kohlenstoffatomen je Rest. Besonders bevorzugt tragen die tertiären Aminogruppen zwei Reste, unabhängig voneinander ausgewählt aus Methyl- und Ethylrest sowie einen weiteren organischen Rest. Beispiele für einsetzbare einbaubare Katalysatoren sind beispielsweise Bisdimethylaminopropylharnstoff, Bis(N,N-Dimethylaminoethoxyethyl)carbamat, Dimethylaminopropylharnstoff, N,N,N-Trimethyl-N-hydroxyethylbis(aminopropylether), N,N,N-Trimethyl-N-hydroxyethylbis(aminoethylether), Diethylethanolamin, Bis(N,N-dimethyl-3-aminopropyl)amin, Dimethylaminopropylamin, 3-Dimethyaminopropyl-N,N-dimethylpropan-1,3-diamin, Dimethyl-2-(2-aminoethoxyethanol) und (1,3-Bis(dimethylamino)-propan-2-ol), N,N-Bis-(3-dimethylamino-propyl)-N-isopropanolamin, Bis-(dimethylaminopropyl)-2-hydroxyethyl-amin, N,N,N-Trimethyl-N-(3 aminopropyl)-bis(aminoethylether), 3-Dimethylaminoisopropyl-diisopropanolamin oder Mischungen davon.

Neben den einbaubaren Aminkatalysatoren können weiter übliche Katalysatoren zur Herstellung der Polyurethane eingesetzt werden. Genannt seien beispielsweise Amidine, wie 2,3-Dimethyl-3,4,5,6-tetrahydropyrimidin, tertiäre Amine, wie Triethylamin, Tributylamin, Dimethylbenzylamin, N-Methyl-, N-Ethyl-, N-Cyclohexylmorpholin, N,N,N',N'-Tetramethylethylendiamin, N,N,N',N'-Tetramethyl-butandiamin, N,N,N',N'-Tetramethyl-hexandiamin, Pentamethyldiethylentriamin, Tetramethyl-diaminoethylether, Bis-(dimethylaminopropyl)-harnstoff, Dimethylpiperazin, 1,2-Dimethylimidazol, 1-Aza-bicyclo-(3,3,0)-octan und vorzugsweise 1,4-Diazabicyclo-(2,2,2)-octan und Alkanolaminverbindungen, wie Triethanolamin, Triisopropanolamin, N-Methyl- und N-Ethyl-diethanolamin und Dimethylethanolamin. Ebenso kommen in Betracht organische Metallverbindungen, vorzugsweise organische Zinnverbindungen, wie Zinn-(II)-salze von organischen Carbonsäuren, z.B. Zinn-(II)-acetat, Zinn-(II)-octoat, Zinn-(II)-ethylhexoat und Zinn-(II)-laurat und die Dialkylzinn-(IV)-salze von organischen Carbonsäuren, z.B. Dibutylzinndiacetat, Dibutylzinndilaurat, Dibutylzinn-maleat und Dioctylzinn-diacetat, sowie Bismutcarboxylate, wie Bismut(III)-neodecanoat, Bismut-2-ethylhexanoat und Bismut-octanoat oder Mischungen davon. Die organischen Metallverbindungen können allein oder vorzugsweise in Kombination mit stark basischen Aminen eingesetzt werden. Handelt es sich bei der Komponente (b) um einen Ester, werden vorzugsweise ausschließlich Aminkatalysatoren eingesetzt. In einer besonders bevorzugten Ausführungsform werden ausschließlich einbaubare Katalysatoren als Katalysatoren (c) eingesetzt.

Werden Katalysatoren (c) eingesetzt, können diese beispielsweise in einer Konzentration von 0,001 bis 5 Gew.-%, insbesondere 0,05 bis 2 Gew.-% als Katalysator bzw. Katalysatorkombination, bezogen auf das Gewicht der Komponente (b) eingesetzt werden.

Als Komponente (d) werden eine oder mehrere CH-Aciden Verbindung der allgemeinen Formel (1): 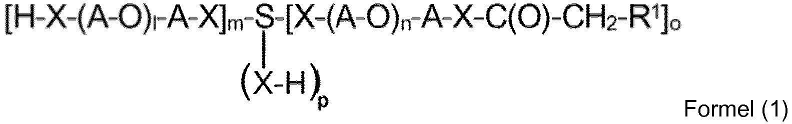 eingesetzt. Die Acidität der CH₂-Gruppe wird dabei durch zwei elektronenziehenden Reste R¹ und die Carbonylgruppe -C(O)- erzeugt. In der allgemeinen Formel (1) steht H-für Wasserstoff, -X- unabhängig voneinander für Sauerstoff oder eine -NH- Gruppe, bevorzugt Sauerstoff, -A-unabhängig voneinander für einen linearen oder verzweigtkettigen, aliphatischen oder aromatischen, vorzugsweise aliphatischen Kohlenwasserstoffrest mit 2 bis 20 Kohlenstoffatomen, -O-für Sauerstoff, S für einen aliphatischen, cycloaliphatischen oder aromatischen, linearen oder verzweigtkettigen Kohlenwasserstoffrest, der substituiert sein kann, -C(O)- für einen Carbonylrest, -CH₂- für einen Methylenrest, R¹ für NO₂ oder einen elektronenziehenden Rest der allgemeinen Formel -C(O)-R², wobei R² unabhängig voneinander für einen Rest steht, ausgewählt ist aus der Gruppe bestehend aus H, -NH₂, -NH-R³ -NR⁴R⁵, OR⁶ oder R⁷, wobei R³, R⁴, R⁵, R⁶ und R⁷ unabhängig ausgewählt sind aus der Gruppe bestehend aus aliphatischen, araliphatischen oder aromatischen Kohlenwasserstoffen, die substituiert sein können, und l und n unabhängig voneinander für ganze Zahlen von 0 bis 200, m für ganze Zahlen von 0 bis 7, vorzugsweise 0 bis 3 und insbesondere 0, 1 oder 2, o für ganze Zahlen von 1 bis 8, vorzugsweise 2 bis 8 und insbesondere 3 bis 8 und p für ganze Zahlen von 0 bis 7, vorzugsweise 0 bis 6 und insbesondere 0 bis 4 steht mit der Maßgabe, dass die Summe von m, o und p nicht größer als 8 besonders bevorzugt 2 bis 8 und insbesondere 3 oder 8 ist. Vorzugsweise stehen l und n unabhängig voneinander für ganze Zahlen von höchstens 50, besonders bevorzugt höchstens 10 und insbesondere höchstens 5, vorzugsweise mindestens 1, besonders bevorzugt mindestens 2. Dabei ist die Summe von l und n vorzugsweise maximal 50, besonders bevorzugt maximal 20 und insbesondere maximal 15 und vorzugsweise mindestens 1 und besonders bevorzugt mindestens 2. Eine Verbindung gemäß Formel (1) ist eine CH-Acide Verbindung, wenn die Reste die oben angegebenen Bedeutungen aufweisen. Dabei beträgt der pKa-Wert der erfindungsgemäßen Verbindung (d) bei 25 °C in Wasser vorzugsweise 0,5 bis 16, vorzugsweise 8 bis 14,0 und insbesondere 8 bis 13,5.

Dabei bedeutet "unabhängig voneinander", dass jeder einzelne der allgemeinen Reste in der Struktur der allgemeinen Formel (1) aus der genannten Gruppe frei gewählt werden kann. So kann beispielsweise jeder Rest A in an jedweder Stelle im Molekül nach unabhängig ausgewählt sein, so dass beispielsweise jeder Rest A verschieden ist. Das bedeutet, dass beispielsweise auch Reste A in der Struktureinheit -(AO)ₙ in allen n Einheiten unterschiedlich sein können und sich beispielsweise auch die m Reste [H-X-(A-O)ₗ-A-X]ₘ- oder die o Reste -[X-(AO)ₙ-A-X-C(O)-CH₂-R¹]ₒ für m und o größer 1 nicht gleichen müssen.

Vorzugsweise steht -A-O- unabhängig voneinander für Ethylenoxid, 1,2-Propylenoxid, 1,2-Butylenoxid oder 2,3-Butylenoxid. Besonders bevorzugt steht -A-O- unabhängig voneinander für ringgeöffnetes Ethylenoxid oder ringgeöffnetes 1,2-Propylenoxid.

Der Rest S kann beispielsweise für einen Kohlenwasserstoffrest, enthaltend 3 bis 12 Kohlenstoffe, stehen.

Die CH-Acide Verbindung (d) ist vorzugsweise erhältlich durch Veresterung eines Polyetherols oder die Amidierung eines Polyetheramins mit einer Verbindung der Formel (2) : 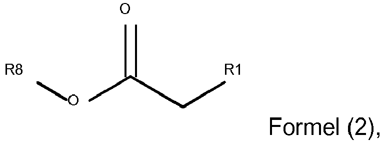 wobei R1 die in oben die gleiche Bedeutung wie oben hat und R⁸ für einen Alkylrest, vorzugsweise einen Methyl-, einen Ethyl- oder einen Propylrest steht.

Vorzugsweise sind die Reste R³, R⁴, R⁵, R⁶ und R⁷ jeweils unabhängig voneinander ausgewählt sind aus der Gruppe bestehend aus aliphatischen Kohlenwasserstoffen mit 1 bis 15, vorzugsweise 2 bis 10 Kohlenstoffatomen, die substituiert sein können. Als Substituenten sind dabei vorzugsweise eine oder mehrere gegenüber Isocyanat reaktive Gruppen enthalten, die vorzugsweise gegenüber Isocyanaten reaktive Wasserstoffatome enthalten. Solche gegenüber Isocyanat reaktiven Gruppen können beispielsweise -OH, -NH- oder -NH₂ Gruppen sein, besonders bevorzugt sind eine oder mehrere OH-Gruppen, insbesondere eine OH-Gruppe. In einer besonders bevorzugten Ausführungsform enthält eine Verbindung gemäß der allgemeinen Formel (1) genau eine gegenüber Isocyanaten reaktive Gruppe und insbesondere eine -OH Gruppe. Falls R² für -NH₂ oder -NHR³ steht gilt die NH₂ bzw.- die -NHR³-Gruppe nicht als isocyanatreaktive Gruppe, sofern nicht der Rest R³ für einen Rest steht, der eine -OH, -NH- oder-NH₂-Gruppe trägt.

In einer weiteren bevorzugten Ausführungsform ist R² -NH₂, -NH-CH₃, -OCH₃, -Alkyl, wie Methyl, Ethyl oder Propyl, -N(CH₃)₂, -NH-(C₂H₄)-OH oder -CH₂-C(O)-O-CH₃, mehr bevorzugt Methyl, Ethyl, Propyl -OCH₃, oder -CH₂-C(O)-O-CH₃ und noch mehr bevorzugt -CH₃.

Dabei ist das Polyetherol oder Polyamin, das mit der Verbindung gemäß der Formel (2) zu einer CH-Aciden Verbindung (d) umgesetzt wird vorzugsweise eine Verbindung [H-X-(A-O)ₗ-A-X]ₘ-S[X-H]ₚ-[X-(A-O)ₙ-A-X-H]ₒ, wobei H, X, A, O, S, l, m, n, o und p die oben angegebenen Bedeutungen haben. Die Verbindung [H-X-(A-O)ₗ-A-X]ₘ-S[X-H]ₚ -[X-(A-O)ₙ-A-X-H]ₒ wird üblicherweise durch Alkoxylierung üblicher Startermoleküle, wie sie auch zur Herstellung von Polyethern eingesetzt werden, erhalten. Solche Startermoleküle sind beispielsweise Ethylenglycol, Diethylenglycol, Propylenglykol, Dipropylenglykol, Glycerin, Trimethylolpropan, Pentaerythrit, Zuckerderivate, wie Saccharose, Hexitderivate, wie Sorbitol, Methylamin, Ethylamin, Isopropylamin, Butylamin, Benzylamin, Anilin, Toluidin, Toluoldiamin, Naphtylamin, Ethylendiamin, Diethylentriamin, 4,4'-Methylendianilin, 1,3,-Propandiamin, 1,6-Hexandiamin, Ethanolamin, Diethanolamin, Triethanolamin sowie andere zwei oder mehrwertige Alkohole oder ein oder mehrwertige Amine oder Mischungen daraus. Vorzugsweise sind die Startermoleküle Glycerin, Trimethylolpropan, Sorbitol und/oder Saccharose. Soll -X- für-NH- stehen, wird als Startermolekül ein Amin eingesetzt oder das Alkoxylierungsprodukt wird noch Aminiert. Solche Aminierungsreaktionen sind bekannt und werden beispielsweise bei der Herstellung von Polyetheraminen, die beispielsweise in der Polyurethanchemie eingesetzt werden können, üblicherweise durchgeführt.

Die Komponente (d) wird im Rahmen der vorliegenden Erfindung vorzugsweise in Mengen von 0,01 bis 5 Gew.-%, besonders bevorzugt 0,05 bis 2 Gew.-% und insbesondere 0.1 bis 1 Gew.-%, bezogen auf das Gesamtgewicht der Komponenten (a) bis (f) eingesetzt. Dabei handelt es sich bei der Komponente (d) üblicherweise um eine Mischung an Verbindungen gemäß Formel (1), wobei insbesondere l, m, n, o und p sowie die Gruppen A und S in den angegebenen Grenzen variieren können.

Wenn das erfindungsgemäße Polyurethan als Polyurethan-Schaumstoff vorliegen soll, enthalten erfindungsgemäße Reaktionsmischungen noch Treibmittel (e). Dabei können alle zur Herstellung von Polyurethanen bekannten Treibmittel eingesetzt werden. Diese können chemische und/oder physikalische Treibmittel enthalten. Solche Treibmittel werden beispielsweise im "Kunststoffhandbuch, Band 7, Polyurethane", Carl Hanser Verlag, 3. Auflage 1993, Kapitel 3.4.5 beschrieben. Unter chemischen Treibmitteln werden dabei Verbindungen verstanden, die durch Reaktion mit Isocyanat gasförmige Produkte bilden. Beispiele für solche Treibmittel sind Wasser oder Carbonsäuren. Unter physikalischen Treibmitteln werden dabei Verbindungen verstanden, die in den Einsatzstoffen der Polyurethan-Herstellung gelöst oder emulgiert sind und unter den Bedingungen der Polyurethanbildung verdampfen. Dabei handelt es sich beispielsweise um Kohlenwasserstoffe, halogenierte Kohlenwasserstoffe und andere Verbindungen, wie zum Beispiel perfluorierte Alkane, wie Perfluorhexan, Fluorchlorkohlenwasserstoffe, und Ether, Ester, Ketone, Acetale und/oder flüssiges Kohlendioxid. Dabei kann das Treibmittel in jeder beliebigen Menge eingesetzt werden. Vorzugsweise wird das Treibmittel in einer Menge eingesetzt, dass der resultierende Polyurethanschaumstoff eine Dichte von 10 bis 850 g/L, besonders bevorzugt 20 bis 800 g/L und insbesondere 25 bis 500 g/L aufweist. Besonders bevorzugt werden Treibmittel, enthaltend Wasser eingesetzt.

Als Kettenverlängerer und Vernetzungsmittel (f) können Verbindungen mit mindestens zwei gegenüber Isocyanaten reaktiven Gruppen eingesetzt werden, die ein Molekulargewicht von weniger als 400 g/mol aufweisen, wobei Moleküle mit zwei gegenüber Isocyanat reaktiven Wasserstoffatomen als Kettenverlängerer und Moleküle mit mehr als zwei gegenüber Isocyanat reaktiven Wasserstoffen als Vernetzer bezeichnet werden. Dabei kann jedoch auch auf das Kettenverlängerungs- oder Vernetzungsmittel verzichtet werden. Zur Modifizierung der mechanischen Eigenschaften, z.B. der Härte, kann sich allerdings der Zusatz von Kettenverlängerungsmitteln, Vernetzungsmitteln oder gegebenenfalls auch Gemischen davon als vorteilhaft erweisen.

Werden Kettenverlängerungsmittel und/oder Vernetzungsmittel (f) eingesetzt, können die bei der Herstellung von Polyurethanen bekannten Kettenverlängerer und/oder Vernetzer eingesetzt werden. Dies sind vorzugsweise niedermolekulare Verbindungen mit gegenüber Isocyanaten reaktiven funktionellen Gruppen, beispielsweise Glycerin, Trimethylolpropan, Glycol und Diamine. Weitere mögliche niedermolekulare Kettenverlängerungsmittel und/oder Vernetzungsmittel sind beispielsweise im "Kunststoffhandbuch, Band 7, Polyurethane", Carl Hanser Verlag, 3. Auflage 1993, Kapitel 3.2 und 3.3.2 angegeben.

Weiter können Hilfsmittel und/oder Zusatzstoffe (g) eingesetzt werden. Dabei können alle zur Herstellung von Polyurethanen bekannten Hilfs- und Zusatzstoffe verwendet werden. Genannt seien beispielsweise oberflächenaktive Substanzen, Schaumstabilisatoren, Zellregler, Trennmittel, Füllstoffe, Farbstoffe, Pigmente, Flammschutzmittel, Hydrolyseschutzmittel, fungistatische und bakteriostatisch wirkende Substanzen. Solche Substanzen sind bekannt und beispielsweise in "Kunststoffhandbuch, Band 7, Polyurethane", Carl Hanser Verlag, 3. Auflage 1993, Kapitel 3.4.4 und 3.4.6 bis 3.4.11 beschrieben.

Im Allgemeinen werden bei der Herstellung des erfindungsgemäßen Polyurethans die Polyisocyanate (a), die Polyole (b), der CH-Aciden Verbindung (d), und, falls eingesetzt die Treibmittel (e) und Kettenverlängerungsmittel und/oder Vernetzungsmittel (f) in solchen Mengen zur Umsetzung gebracht, dass das Äquivalenz-Verhältnis von NCO-Gruppen der Polyisocyanate (a) zur Summe der reaktiven Wasserstoffatome der Komponenten (b), (c), (d) und gegebenenfalls (e) und (f) 0,75 bis 1,5:1, vorzugsweise 0,80 bis 1,25:1 beträgt. Falls die zelligen Kunststoffe zumindest teilweise Isocyanuratgruppen enthalten, wird üblicherweise ein Verhältnis von NCO-Gruppen der Polyisocyanate (a) zur Summe der reaktiven Wasserstoffatome der Komponente (b), (c), (d) und gegebenenfalls (e) und (f) von 1,5 bis 20:1, vorzugsweise 1,5 bis 8:1 verwendet. Ein Verhältnis von 1:1 entspricht dabei einem Isocyanatindex von 100.

Die speziellen Ausgangssubstanzen (a) bis (g) für die Herstellung von erfindungsgemäßen Polyurethanen unterscheiden sich jeweils quantitativ und qualitativ nur geringfügig wenn als erfindungsgemäßes Polyurethan ein thermoplastisches Polyurethan, ein Weichschaumstoff, ein Halbhartschaumstoff, ein Hartschaumstoff oder ein Integralschaumstoff hergestellt werden soll. So werden beispielsweise für die Herstellung von massiven Polyurethanen keine Treibmittel eingesetzt sowie für thermoplastisches Polyurethan überwiegend streng difunktionelle Ausgangssubstanzen eingesetzt. Weiter lässt sich beispielsweise über die Funktionalität und die Kettenlänge der höhermolekularen Verbindung mit mindestens zwei reaktiven Wasserstoffatomen die Elastizität und Härte des erfindungsgemäßen Polyurethans variieren. Solche Modifikationen sind dem Fachmann bekannt.

Die Edukte für die Herstellung eines massiven Polyurethans werden beispielsweise in EP 0989146 oder EP 1460094, die Edukte für die Herstellung eines Weichschaums in PCT/EP2005/010124 und EP 1529792, die Edukte für die Herstellung eines Halbhartschaums im "Kunststoffhandbuch, Band 7, Polyurethane", Carl Hanser Verlag, 3. Auflage 1993, Kapitel 5.4, die Edukte für die Herstellung eines Hartschaumstoffs in PCT/EP2005/010955 und die Edukte für Herstellung eines Integralschaumstoffs in EP 364854, US 5506275 oder EP 897402 beschrieben. Zu den in diesen Dokumenten beschriebenen Edukten wird dann jeweils noch die CH-Acide Verbindung (d) zugegeben.

Neben dem erfindungsgemäßen Verfahren ist auch ein Polyurethan, erhältlich nach einem erfindungsgemäßen Verfahren Gegenstand der Erfindung. Die erfindungsgemäßen Polyurethane werden vorzugsweise in geschlossenen Räumen eingesetzt, beispielsweise als thermische Isoliermaterialien in Wohngebäuden, wie Isolierungen für Rohre und Kühlschränke, im Möbelbau, beispielsweise als Dekorelemente oder als Sitzpolster sowie im Automobilinnenraum, beispielsweise als Lenkräder, Armaturenbretter, Türverkleidungen, Teppichhinterschäumungen, akustische Schaumstoffe, wie Dachhimmel, sowie Kopfstützen oder Schaltknäufe. Dabei werden insbesondere CH-Acide Verbindung bevorzugt, die gegenüber Isocyanaten eine oder mehrere reaktive Gruppen aufweisen. Diese ermöglichen es, dass die CH-Acide Verbindung (d) an das Polyurethangerüst angebunden wird was zum einen zu einer längeren Wirksamkeit, speziell unter anspruchsvollen Bedingungen, wie hohen Temperaturen oder Einstrahlung von Sonnenlicht, zu längerer Aldehydreduktion führen als ohne die gegenüber Isocyanat reaktiven Gruppen. Dazu kommt, dass CH-Acide Verbindungen (d) mit einbaubaren Gruppen oder einem Molekulargewicht von größer als 300, bevorzugt größer als 350, noch mehr bevorzugt größer als 450 g/mol und insbesondere größer 700 g/mol zu Polyurethanen führt, die neben einer geringen Emission von Aldehyden allgemein geringere Emissionen flüchtiger organischer Verbindungen zeigen. Ebenfalls erhöht der Gehalt von Alkylenoxideinheiten die Verträglichkeit der Verbindung (d), was zu einer längeren Wirksamkeit aber auch zu einer besseren Dispergierbarkeit im Polyurethan und damit verbesserten Wirksamkeit führt.

Die Erfindung soll im Folgenden anhand von Beispielen verdeutlicht werden.

Ausgangsmaterialien:

| | | |
|---|---|---|
| Polyol A: | Polyetherol mit einer OH-Zahl 28 mg KOH/g und einer Funktionalität von 2.7 auf Basis von Ethylenoxyd und Propylenoxid, einem Propylenoxidgehalt von 84 Gew.-% und einem Ethylenoxidgehalt von 14 Gew.-% | |
| Polyol B: | Polyetherol mit einer OH-Zahl 250 mg KOH/g und einer Funktionalität von 2.0 auf Basis von Polyol A (35%), Propylenoxid (45%) und Dimethylaminopropylamin (20%) | |
| Polyol C: | Polyetherol mit einer OH-Zahl 250 mg KOH/g und einer Funktionalität von 3.0 auf Basis von Trimethylolpropan und Ethylenoxyd, einem Ethylenoxidgehalt von 80 Gew.-% | |
| Polyol D: | Polyetherol mit einer OH-Zahl 490 mg KOH/g und einer Funktionalität von 4.3 auf Basis von Saccharose, Glycerin und Propylenoxid, einem Sacharosegehalt von 20 Gew.-%, einem Glyceringehalt von 13% und einem Propylenoxidgehalt von 67 Gew.-% | |
| TEOA: | Triethanolamine | |
| Isopur® SU-12021: | Schwarzpaste der Firma ISL-Chemie | |
| Jeffcat® ZF10: | Katalysator der Firma Huntsman | |
| Jeffcat® DPA: | Katalysator der Firma Huntsman | |

Additive
A1: Veresterungsprodukt von einem Mol Polyol C (Mw ca. 670) mit 2.5 mol Methylacetoacetat
A2: Veresterungsprodukt von einem Mol Polyol C (Mw ca. 670) mit 3.0 mol Methylacetoacetat
A3: Veresterungsprodukt von einem Mol Polyol D (Mw ca. 500) mit 3.0 mol Methylacetoacetat
A4: Veresterungsprodukt von einem Mol Polyol D (Mw ca. 500) mit 4.0 mol Methylacetoacetat

Die Additive A1 bis A 4 wurden dabei folgendermaßen hergestellt:
A3:
664,7 g Polyol D, 463,1 g Methyacetoacetat (CAS 105-45-3) und 40 ppm Titantetrabutanolat wurden in einem 2l - Rundkolben mit Thermometer, Stickstoffeinleitung, Blattrührer und Destillationsbrücke gefüllt. Die Mischung wurde unter Rühren innerhalb von 30 Minuten auf 130°C erhitzt. Innerhalb von 2 h wurde die Temperatur auf 170°C erhöht und dann für 3 Stunden bei dieser Temperatur belassen. Dabei wurde das entstehende Methanol durch Destillation entfernt. Es entstand ein farbloses, flüssiges Produkt (A3).

Zur Herstellung der weiteren Additive wurden das Polyol sowie den Mengen Methyacetoacetat entsprechend angepasst.

Isocyanat A: Mischung von 85 Teile Carbodiimid-modifiziertes 4,4'-MDI und 15 Teil polymeres Diphenylmethandiisocyanat PMDI mit einem NCO-Gehalt von 27.1

Die Mischung A wurde durch Vermischen von folgenden Komponenten hergestellt:
93.6 Gew.-Teile Polyol A
3.0 Gew.-Teile Polyol B
1.5 Gew.-Teile TEOA
0.5 Gew.-Teile Isopur SA-21050
2.3 Gew.-Teile Wasser
0.4 Gew.-Teile Jeffcat DPA
0.2 Gew.-Teile Jeffcat ZF10
0.5 Gew.-Teile Verbindungen A1 bis A4 gemäß Tabelle 1

Die Mischung A und die Isocyanat-Komponente A sowie die Addtive gemäß Tabelle 1 wurden bei einem Isocyanatindex von 100 miteinander vermischt und in eine geschlossene Form gegeben, so dass Formteile mit einer mittleren Dichte von 160 g/L erhalten wurden.

Zur Bestimmung von Formaldehyde wurde analog ASTM D-5116-06 vorgegangen. Die Kammergröße betrug 4,7 Litern. Als Polyurethanproben wurden Stücke mit einer Größe von 110 mm x 100 mm x 25 mm eingesetzt. Wurden Formschaumstoffe geprüft wurden Teile aus dem Innern des Schaumstoffs eingesetzt. Die Temperatur in der Meßkammer betrug während der Messung 65 °C, die relative Luftfeuchtigkeit 50 %. Die Luftaustauschrate betrug 3,0 Liter pro Stunde. Der Abluftstrom mit flüchtigen Aldehyden aus dem Polyurethan wurden über 120 Minuten durch eine Kartusche mit 2,4-Dinitrophenylhydrazin beschichtetes Silika geleitet. Die DNPH-Kartusche wurde anschließend mit einem Gemisch von Acetonitril und Wasser eluiert. Die Konzentration von Formaldehyd im Eluat wurde mittels HPLC bestimmt. Nach diesem Aufbau liegt die Nachweisgrenze für Formaldehydemissionen bei ≤ 11 µg/m³.

Tabelle 1: In der Kammer bestimmte Formaldehydwerte von Halbhart-Schäume ohne Zugabe von Additiven (Referenz) sowie bei Zugabe der jeweiligen Additiven A1 bis A4 in den angegebenen Konzentrationen, jeweils angegeben in Gewichtsteilen bezogen auf das Gesamtgewicht der Mischung A.

**Tabelle 1**

| | Konz. in A | Formaldehyd (µg/m³) |
|---|---|---|
| Referenz | - | 936 |
| A1 | 0.50% | 337 |
| A2 | 0.50% | 330 |
| A3 | 0.50% | 129 |
| A4 | 0.50% | 124 |

## Patentansprüche

1. Verfahren zur Herstellung von Polyurethanen bei dem man
(a) Polyisocyanat,
(b) polymeren Verbindungen mit gegenüber Isocyanaten reaktiven Gruppen, ausgewählt aus der Gruppe der Polyetherpolyole, Polyesterpolyole oder Mischungen daraus mit einer Funktionalität von 2 bis 8 und einem zahlenmittleren Molekulargewicht von 400 bis 15000 g/mol
(c) Katalysatoren,
(d) einer CH-Aciden Verbindung gemäß der allgemeinen Formel (1): 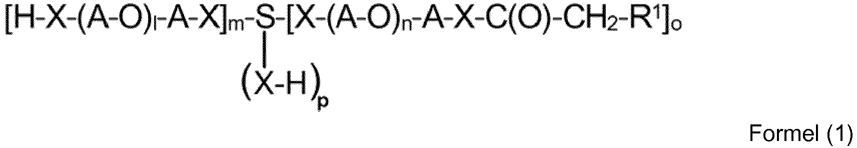 wobei
H-für Wasserstoff,
-X- unabhängig voneinander für Sauerstoff oder eine -NH- Gruppe, vorzugsweise -O-,
-A- unabhängig voneinander für einen linearen oder verzweigtkettigen aliphatischen oder aromatischen Kohlenwasserstoffrest mit 2 bis 20 Kohlenstoffatomen,
-O- für Sauerstoff,
S für einen aliphatischen, cycloaliphatischen oder aromatischen, linearen oder verzweigtkettigen Kohlenwasserstoffrest, der substituiert sein kann,
-C(O)- für einen Carbonylrest,
-CH₂- für einen Methylenrest,
R¹ unabhängig voneinander für NO₂ oder einen elektronenziehenden Rest der allgemeinen Formel -C(O)-R² steht und R² unabhängig voneinander für einen Rest steht, ausgewählt ist aus der Gruppe bestehend aus H, -NH₂, -NH-R³ -NR⁴R⁵, OR⁶ oder R⁷, wobei R³, R⁴, R⁵, R⁶ und R⁷ unabhängig ausgewählt sind aus der Gruppe bestehend aus aliphatischen, araliphatischen oder aromatischen Kohlenwasserstoffen, die substituiert sein können, und
l und n unabhängig voneinander für ganze Zahlen von 0 bis 200 stehen,
m für ganze Zahlen von 0 bis 7 steht und
o für ganze Zahlen von 1 bis 8 steht
p für ganze Zahlen von 0 bis 7 steht
mit der Maßgabe, dass die Summe von m, o und p nicht größer als 8 ist,
und gegebenenfalls
(e) Treibmittel,
(f) Kettenverlängerungs- und oder Vernetzungsmittel und
(g) Hilfsmittel und/oder Zusatzstoffe
zu einer Reaktionsmischung vermischt und die Reaktionsmischung zum Polyurethan ausreagieren lässt.

2. Verfahren nach Anspruch 1, **dadurch gekennzeichnet, dass** -A-O- jeweils unabhängig voneinander für ringgeöffnetes Ethylenoxid oder ringgeöffnetes 1,2-Propylenoxid steht.

3. Verfahren nach Anspruch 1 oder 2, **dadurch gekennzeichnet, dass** die CH-Acide Verbindung (d) erhältlich ist durch Veresterung eines Polyetherols oder die Amidierung eines Polyetheramins mit einer Verbindung der Formel (2) : 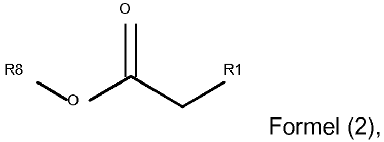 wobei R1 die in Anspruch 1 definierte Bedeutung hat und R8 für einen Methyl, einen Ethyl- oder einen Propylrest steht.

4. Verfahren nach Anspruch 3, **dadurch gekennzeichnet, dass** das Polyetherol oder Polyetheramin ein Polyetherol oder Polyetheramin der allgemeinen Formel [H-X-(A-O)ₗ-A-X]ₘ-S[X-H]ₚ -[X-(AO)ₙ-A-X-H]ₒ ist, wobei H, X, A, O, S, l, m, n, o und p die oben angegebenen Bedeutungen haben.

5. Verfahren nach Anspruch 4, **dadurch gekennzeichnet, dass** das Polyetherol oder Polyetheramin der allgemeinen Formel [H-X-(A-O)ₗ-A-X]ₘ₋S[X-H]ₚ -[X-(AO)ₙ-A-X-H]ₒ erhältlich ist durch Alkoxylierung von Glycerin, Trimethylolpropan, Sorbitol und/oder Saccharose und gegebenenfalls anschließender Aminierung erhältlich ist.

6. Verfahren nach einem der Ansprüche 1 bis 5, **dadurch gekennzeichnet, dass** die Reste R⁴, R⁵ R⁶, R⁷ und R⁸ jeweils unabhängig voneinander ausgewählt sind aus der Gruppe, bestehend aus aliphatischen Kohlenwasserstoffen mit 1 bis 15 Kohlenstoffatomen, die substituiert sein können.

7. Verfahren nach einem der Ansprüche 1 bis 6, **dadurch gekennzeichnet, dass** die Reste R⁴, R⁵, R⁵,und R⁷ jeweils unabhängig voneinander für Reste stehen, die als Substituent eine oder mehrere, gegenüber Isocyanat reaktive Gruppen enthalten.

8. Verfahren nach einem der Ansprüche 1 bis 6, **dadurch gekennzeichnet, dass** der Rest R¹ für eine Acetylgruppe steht.

9. Verfahren nach einem der Ansprüche 1 bis 8, **dadurch gekennzeichnet, dass** die Komponente (d), bezogen auf das Gesamtgewicht der Komponenten (a) bis (f) zu 0.01 bis 5 Gew.-% enthalten ist.

10. Verfahren nach einem der Ansprüche 1 bis 9, **dadurch gekennzeichnet, dass** die polymeren Verbindungen mit gegenüber Isocyanaten reaktiven Gruppen (b) Polyetherole enthalten.

11. Verfahren nach einem der Ansprüche 1 bis 10, **dadurch gekennzeichnet, dass** die Katalysatoren (c) einbaubare Aminkatalysatoren enthalten.

12. Verfahren nach Anspruch 11, **dadurch gekennzeichnet, dass** als einbaubare Katalysatoren Verbindungen eingesetzt werden, die neben der bzw. den gegenüber Isocyanaten reaktiven Gruppen eine oder mehrere tertiäte, aliphatische Aminogruppen aufweisen.

13. Verfahren nach Anspruch 12, **dadurch gekennzeichnet, dass** mindestens eine tertiäre Aminogruppe zwei Reste, unabhängig voneinander ausgewählt aus Methyl- und Ethylrest, sowie einen weiteren organischen Rest trägt.

14. Polyurethan, erhältlich nach einem der Ansprüche 1 bis 13.

15. Verwendung eines Polyurethans nach Anspruch 14 im Innern von Fahrzeugen.

## Claims

1. A process for the production of polyurethanes where
(a) polyisocyanate,
(b) polymeric compounds having groups reactive toward isocyanates, selected from the group of the polyether polyols, polyester polyols and mixtures thereof with functionality from 2 to 8 and with number-average molar mass from 400 to 15 000 g/mol,
(c) catalysts,
(d) a CH-acidic compound of the general formula (1) : 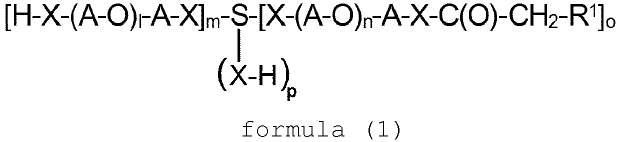 where
H- is hydrogen,
-X- is mutually independently oxygen or a -NH-group, preferably -O-,
-A- is mutually independently a linear or branched-chain aliphatic or aromatic hydrocarbon moiety having from 2 to 20 carbon atoms,
-O- is oxygen,
S is an aliphatic, cycloaliphatic or aromatic, linear or branched-chain hydrocarbon moiety which can have substitution,
-C(O)- is a carbonyl moiety,
-CH₂- is a methylene moiety,
R¹ is mutually independently NO₂ or an electron-withdrawing moiety of the general formula - C(O)-R², and R² is mutually independently a moiety selected from the group consisting of H, -NH₂, -NH-R³ -NR⁴R⁵, OR⁶ or R⁷, where R³, R⁴, R⁵, R⁶ and R⁷ independently are selected from the group consisting of aliphatic, araliphatic or aromatic hydrocarbons, which may have substitution, and
l and n are mutually independently integers from 0 to 200,
m is integers from 0 to 7 and
o is integers from 1 to 8 and
p is integers from 0 to 7,
with the proviso that the sum of m, o and p is not greater than 8,
and optionally
(e) blowing agent,
(f) chain extender and or crosslinking agent, and
(g) auxiliaries and/or additives
are mixed to give a reaction mixture, and the reaction mixture is allowed to complete a reaction to give the polyurethane.

2. The process according to claim 1, wherein -A-O- is respectively mutually independently ring-opened ethylene oxide or ring-opened propylene 1,2-oxide.

3. The process according to claim 1 or 2, wherein the CH-acidic compound (d) is obtainable via esterification of a polyetherol or amidation of a polyetheramine with a compound of the formula (2): 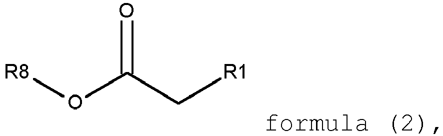 where R1 is as defined in claim 1 and R8 is methyl or an ethyl moiety or a propyl moiety.

4. The process according to claim 3, wherein the polyetherol or polyetheramine is a polyetherol or polyetheramine of the general formula [H-X-(A-O)ₗ-A-X]ₘ-S[X-H]ₚ -[X-(AO)ₙ-A-X-H]ₒ, where the definitions of H, X, A, O, S, l, m, n, o and p are those stated above.

5. The process according to claim 4, wherein the polyetherol or polyetheramine of the general formula [H-X-(A-O)ₗ-A-X]ₘ-S[X-H]ₚ -[X-(AO)ₙ-A-X-H]ₒ is obtainable via alkoxylation of glycerol, trimethylolpropane, sorbitol and/or sucrose and optionally subsequent amination.

6. The process according to any of claims 1 to 5, wherein the moieties R⁴, R⁵, R⁶, R⁷, and R⁸ are selected each independently of one another from the group consisting of aliphatic hydrocarbons having from 1 to 15 carbon atoms, which may have substitution.

7. The process according to any of claims 1 to 6, wherein the moieties R⁴, R⁵, R⁵, and R⁷ are respectively mutually independently moieties which comprise, as substituent, one or more groups reactive toward isocyanate.

8. The process according to any of claims 1 to 6, wherein the moiety R¹ is an acetyl group.

9. The process according to any of claims 1 to 8, wherein the quantity comprised of component (d), based on the total weight of components (a) to (f), is from 0.01 to 5% by weight.

10. The process according to any of claims 1 to 9, wherein the polymeric compounds (b) having groups reactive toward isocyanates comprise polyetherols.

11. The process according to any of claims 1 to 10, wherein the catalysts (c) comprise incorporable amine catalysts.

12. The process according to claim 11, wherein compounds used as incorporable catalysts have, alongside the group(s) reactive toward isocyanates, one or more tertiary aliphatic amino groups.

13. The process according to claim 12, wherein at least one tertiary amino group bears two moieties selected mutually independently from methyl and ethyl moiety, and also bears another organic moiety.

14. A polyurethane which can be obtained according to any of claims 1 to 13.

15. The use of a polyurethane according to claim 14 in the interior of vehicles.

## Revendications

1. Procédé de fabrication de polyuréthanes, selon lequel
(a) un polyisocyanate,
(b) des composés polymères contenant des groupes réactifs avec les isocyanates, choisis dans le groupe constitué par les polyéther-polyols, les polyester-polyols ou les mélanges de ceux-ci ayant une fonctionnalité de 2 à 8 et un poids moléculaire moyen en nombre de 400 à 15 000 g/mol,
(c) des catalyseurs,
(d) un composé à CH acide selon la formule générale (1) : 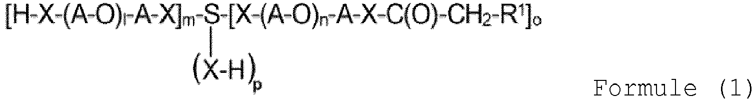 dans laquelle
H représente hydrogène,
les -X- représentent indépendamment les uns des autres l'oxygène ou un groupe -NH-, de préférence -O-,
les -A- représentent indépendamment les uns des autres un radical hydrocarboné aliphatique ou aromatique, linéaire ou ramifié, de 2 à 20 atomes de carbone,
-O- représente l'oxygène,
S représente un radical hydrocarboné aliphatique, cycloaliphatique ou aromatique, linéaire ou ramifié, qui peut être substitué,
-C(O)- représente un radical carbonyle,
-CH₂- représente un radical méthylène,
les R¹ représentent indépendamment les uns des autres NO₂ ou un radical attracteur d'électrons de formule générale -C(O)-R², et les R² représentent indépendamment les uns des autres un radical choisi dans le groupe constitué par H, -NH₂, -NH-R³ -NR⁴R⁵, OR⁶ ou R⁷; R³, R⁴, R⁵, R⁶ et R⁷ étant choisis indépendamment les uns des autres dans le groupe constitué par les hydrocarbures aliphatiques, araliphatiques ou aromatiques, qui peuvent être substitués, et
l et n représentent indépendamment l'un de l'autre des nombres entiers de 0 à 200,
m représente des nombres entiers de 0 à 7, et
o représente des nombres entiers de 1 à 8,
p représente des nombres entiers de 0 à 7,
à condition que la somme de m, o et p ne soit pas supérieure à 8,
et éventuellement
(e) des agents gonflants,
(f) des allongeurs de chaînes et/ou des agents de réticulation, et
(g) des adjuvants et/ou additifs,
sont mélangés en un mélange réactionnel, et le mélange réactionnel est laissé réagir pour former le polyuréthane.

2. Procédé selon la revendication 1, **caractérisé en ce que** les -A-O- représentent chacun indépendamment les uns des autres un oxyde d'éthylène à cycle ouvert ou un oxyde de 1,2-propylène à cycle ouvert.

3. Procédé selon la revendication 1 ou 2, **caractérisé en ce que** le composé à CH acide (d) peut être obtenu par estérification d'un polyétherol ou amidation d'une polyétheramine avec un composé de formule (2) : 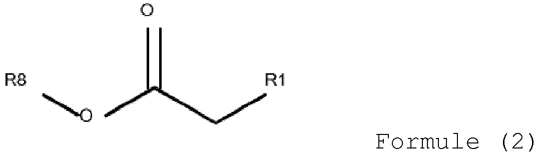 dans laquelle R1 a la signification définie dans la revendication 1, et R8 représente un radical méthyle, éthyle ou propyle.

4. Procédé selon la revendication 3, **caractérisé en ce que** le polyétherol ou la polyétheramine est un polyétherol ou une polyétheramine de formule générale [H-X-(A-O)ₗ-A-X]ₘ-S[X-H]ₚ-[X-(AO)ₙ-A-X-H]ₒ, H, X, A, O, S, l, m, n, o et p ayant les significations indiquées précédemment.

5. Procédé selon la revendication 4, **caractérisé en ce que** le polyétherol ou la polyétheramine de formule générale [H-X-(A-O)ₗ-A-X]ₘ-S[X-H]ₚ-[X-(AO)ₙ-A-X-H]ₒ peut être obtenu par alcoxylation de glycérine, de triméthylolpropane, de sorbitol et/ou de saccharose, et éventuellement amination ultérieure.

6. Procédé selon l'une quelconque des revendications 1 à 5, **caractérisé en ce que** les radicaux R⁴, R⁵, R⁶, R⁷ et R⁸ sont chacun choisis indépendamment les uns des autres dans le groupe constitué par les hydrocarbures aliphatiques de 1 à 15 atomes de carbone, qui peuvent être substitués.

7. Procédé selon l'une quelconque des revendications 1 à 6, **caractérisé en ce que** les radicaux R⁴, R⁵, R⁵ et R⁷ représentent chacun indépendamment les uns des autres des radicaux qui contiennent en tant que substituant un ou plusieurs groupes réactifs avec les isocyanates.

8. Procédé selon l'une quelconque des revendications 1 à 6, **caractérisé en ce que** le radical R¹ représente un groupe acétyle.

9. Procédé selon l'une quelconque des revendications 1 à 8, **caractérisé en ce que** le composant (d) est contenu à hauteur de 0,01 à 5 % en poids, par rapport au poids total des composants (a) à (f).

10. Procédé selon l'une quelconque des revendications 1 à 9, **caractérisé en ce que** les composés polymères contenant des groupes réactifs avec les isocyanates (b) contiennent des polyétherols.

11. Procédé selon l'une quelconque des revendications 1 à 10, **caractérisé en ce que** les catalyseurs (c) contiennent des catalyseurs aminés incorporables.

12. Procédé selon la revendication 11, **caractérisé en ce que** des composés qui, en plus des groupes réactifs avec les isocyanates, comprennent un ou plusieurs groupes amino aliphatiques tertiaires sont utilisés en tant que catalyseurs incorporables.

13. Procédé selon la revendication 12, **caractérisé en ce qu'**au moins un groupe amino tertiaire porte deux radicaux, choisis indépendamment l'un de l'autre parmi un radical méthyle et éthyle, et un autre radical organique.

14. Polyuréthane, pouvant être obtenu selon l'une quelconque des revendications 1 à 13.

15. Utilisation d'un polyuréthane selon la revendication 14 dans l'espace intérieur de véhicules.
